# FASCICULE DE BREVET EUROPEEN

(11) **EP 2 447 210 B1**
(45) Date de publication et mention de la délivrance du brevet: **24.04.2013**
(21) Numéro de dépôt: 11290419.8
(22) Date de dépôt: 19.09.2011
(51) Int. Cl.: C01B 3/38

(54) **Procédé de production d'hydrogène par vaporeformage d'une coupe petrolière avec production de vapeur**
Verfahren zur Herstellung von Wasserstoff durch Dampfreformierung von einer Erdöl-Fraktion mit Dampferzeugung
Process for the production of hydrogen by steam reforming of a petroleum fraction with steam production

(30) Priorité: 28.10.2010 FR 1004242
(43) Date de publication de la demande: 02.05.2012
(73) Titulaire: IFP Energies nouvelles, 92852 Rueil-Malmaison Cedex (FR)
(72) Inventeur: Fischer Beatrice, 69005 Lyon (FR); Giroudiere Fabrice, 69530 Orlienas (FR)

(56) Documents cités:
- FR-A1- 2 890 955
- FR-A1- 2 914 395
- US-A- 3 958 951
- MINKKINEN A. ; GIROUDIÈRE F. ; COLIN J.: "Gas to Hydrogen Power Process - Facilitates Co2 Capture for Sequestration", PROCEEDINGS OF THE 16TH WORLD HYDROGEN ENERGY CONFERENCE, vol. WHEC 16, 13 juin 2006 (2006-06-13), - 16 juin 2006 (2006-06-16), pages 1-9, XP002625170, Lyon, France
- GIROUDIÈRE F. ; AMBROSINO J.-L- ; FISCHER B. ; PAVONE D. ; SANZ-GARCIA E. ; LE GALL A. ; SOUTIF E. ; VLEEMING H.: "HyGenSys: a Flexible Process for Hydrogen and Power Production with Reduction of CO2 Emission", OIL & GAS SCIENCE AND TECHNOLOGY, vol. 65, no. 5, 22 septembre 2010 (2010-09-22), pages 673-688, XP002625171, IFP Energies Nouvelles, France

## Description

### DOMAINE DE L'INVENTION

La présente invention se situe dans le domaine des procédés de production d'hydrogène par vaporeformage de coupes pétrolières. Le gaz de synthèse, mélange de monoxyde de carbone (CO) et d'hydrogène (H2), est produit par le procédé de vaporéformage à partir principalement de gaz naturel. La réaction de vaporéformage est une réaction fortement endothermique dont les rendements sont d'autant meilleurs que la réaction est effectuée à température élevée. Avec les matériaux actuels, on parvient à une température voisine de 900 degré centigrades. Selon l'état de l'art, le catalyseur est disposé dans une pluralité de tubes situés dans la zone de radiation d'un four spécial. Les fumées quittent habituellement la zone de radiation à une température supérieure à 900°C, ce qui laisse une quantité de chaleur importante à récupérer dans la zone de convection du four.

Généralement, la chaleur disponible sur les fumées en zone de convection est utilisée pour produire de la vapeur d'eau, une partie de la vapeur d'eau produite étant utilisée avec la charge du procédé. Parfois la chaleur encore disponible sur les fumées est utilisée pour la préchauffe de l'air de combustion, ainsi que pour la préchauffe de la charge du vaporéformage.

A la sortie de la zone catalytique, le gaz de synthèse est à une température de 900°C environ, et doit être refroidi très rapidement pour éviter la corrosion du réacteur due au mélange CO et hydrogène (phénomène appelé "metal dusting"). Généralement le refroidissement rapide des effluents réactionnels est obtenu par une production supplémentaire de vapeur d'eau. Au total la production de vapeur d'eau liée au procédé de vaporéformage est importante, et souvent largement excédentaire par rapport aux besoins sur le site d'utilisation de l'hydrogène. D'autres procédés ont été proposés, en particulier le procédé Hygensys, qui utilise les fumées produites par une turbine à gaz comme fluide caloporteur dans un réacteur échangeur spécifique, ces fumées étant réchauffées à la sortie du réacteur de vaporéformage pour produire de l'électricité à l'aide d'une turbine d'expansion. Il subsiste néanmoins une quantité de vapeur d'eau plus ou moins importante qui est exportée, en moins grande quantité toutefois que dans le procédé de base.

Par ailleurs, le procédé Hygensys coproduit de l'électricité, ce qui n'est pas nécessairement utile sur le site et nécessite alors un réseau avec transformateur pour être exportée.

Le procédé suivant l'invention permet d'optimiser la production de vapeur d'eau au sens où la vapeur d'eau produite est entièrement utilisée pour satisfaire les besoins internes au procédé, c'est-à-dire essentiellement la vapeur d'eau nécessaire au mélange avec la charge hydrocarbure, et celle nécessaire pour les équipements du procédé.

Le procédé selon l'invention ne coproduit pas d'électricité, de sorte que les seuls produits du procédé sont l'hydrogène et le CO2 rejeté. De ce point de vue, le procédé selon la présente invention est plus performant que les procédés de l'art antérieur. Le procédé selon l'invention est également plus compact, donc moins coûteux, notamment en raison de la simplification des échangeurs placés sur les fumées en sortie de réacteur (25).

Enfin, le procédé selon l'invention permet une consommation plus faible de combustible, donc un niveau de rejet CO2, exprimé en kg de CO2 rejeté par kg d'hydrogène produit, plus faible que tous les procédés de production de gaz de synthèse de l'art antérieur.

### EXAMEN DE L'ART ANTERIEUR

On se limitera au procédé connu sous le nom commercial d'Hygensys et dont on peut trouver une description dans le brevet FR 2.894.955.

Ce procédé Hygensys entre dans la catégorie des procédés de production du gaz de synthèse par vaporeformage d'une coupe hydrocarbonée ou de gaz naturel, et se caractérise par un apport de calories réalisé au moyen d'un gaz chaud généré à l'extérieur du réacteur échangeur au sein duquel s'effectue les réactions de vaporeformage. Le réacteur échangeur lui même peut faire appel à la conception originale décrite dans le brevet FR 2.914,395.

Le procédé Hygensys décrit dans les documents cités, coproduit de la vapeur d'eau excédentaire et de l'électricité.

Le brevet US 3,958, 951 décrit un four de reformage muni de tubes remplis de catalyseur, côté procédé, ces tubes étant chauffés dans une zone de convection.

Le présent procédé se différencie de l'art antérieur par une absence de coproduction de vapeur d'eau et d'électricité. De plus son niveau de rejet CO2 ramené à l'unité d'hydrogène produit est plus faible que celui de l'art antérieur, et permet de rejeter environ 0,5 kg de CO2 en moins ramené au kg d'hydrogène produit.

### DESCRIPTION SOMMAIRE DES FIGURES

La figure 1 représente un schéma du procédé Hygensys selon le brevet FR 2.890.955.
La figure 2 représente un schéma du procédé selon la présente invention.

### DESCRIPTION SOMMAIRE DE L'INVENTION

La présente invention peut se définir comme un procédé de production d'hydrogène pur, c'est à dire ayant un niveau de pureté au moins égal à 99,5% ( poids), par vaporeformage d'une coupe hydrocarbonée dans un réacteur échangeur utilisant comme fluide caloporteur des fumées chaudes et en pression générées par une chambre de combustion. Par rapport à tous les procédés de l'art antérieur, le procédé selon la présente invention génère une quantité de vapeur d'eau qui correspond exactement aux besoins du procédé, c'est à dire en premier lieu à la vapeur d'eau nécessaire au vaporeformage de la charge hydrocarbonée, et en second lieu à la fourniture d'énergie de la turbine à vapeur qui permet d'entrainer le compresseur fournissant le niveau de pression requis sur le fluide caloporteur.

On entend par "exactement" une quantité de vapeur d'eau égale aux besoins précédemment définis à plus ou moins 10% près, sachant qu'un dispositif de contrôle et régulation de la pression des fumées faisant appel à une vanne placée en aval des échangeurs sur la ligne d'évacuation desdites fumées après leur passage dans le réacteur de vaporéformage, permet d'absorber les plus ou moins 10% de variations autorisés autour du point de fonctionnement nominal du procédé.

Plus précisément, le procédé de production d'hydrogène par vaporeformage d'une coupe pétrolière selon la présente invention fait appel à une chambre de combustion (27) produisant des fumées chaudes (34) à partir d'un flux d'air (20) et de gaz combustible (19).

Lesdites fumées chaudes (34) sont mises en pression par le compresseur (32), et apportent leurs calories au niveau du réacteur échangeur (25) à l'intérieur duquel s'effectuent les réactions de vaporeformage de la charge hydrocarbure (1) en mélange avec la vapeur (17).

La charge hydrocarbure (1) peut être constituée de tout type de coupes pétrolières, y compris le gaz naturel, et sera préférentiellement une coupe à nombre d'atome de carbone compris entre 1 et 10, et préférentiellement compris entre 1 et 5.

L'effluent réactionnel (2) constitué essentiellement d'un mélange d'hydrogène et de monoxyde de carbone (appelé par l'homme du métier "gaz de synthèse") est refroidi dans une série d'échangeurs notés (11), (12), (13), et les fumées (35) en sortie du réacteur (25) sont refroidies dans une autre série d'échangeurs (6-1) (7-1), permettent de générer la vapeur d'eau introduite par les flux (8), (8') et (9') dans le ballon (5).

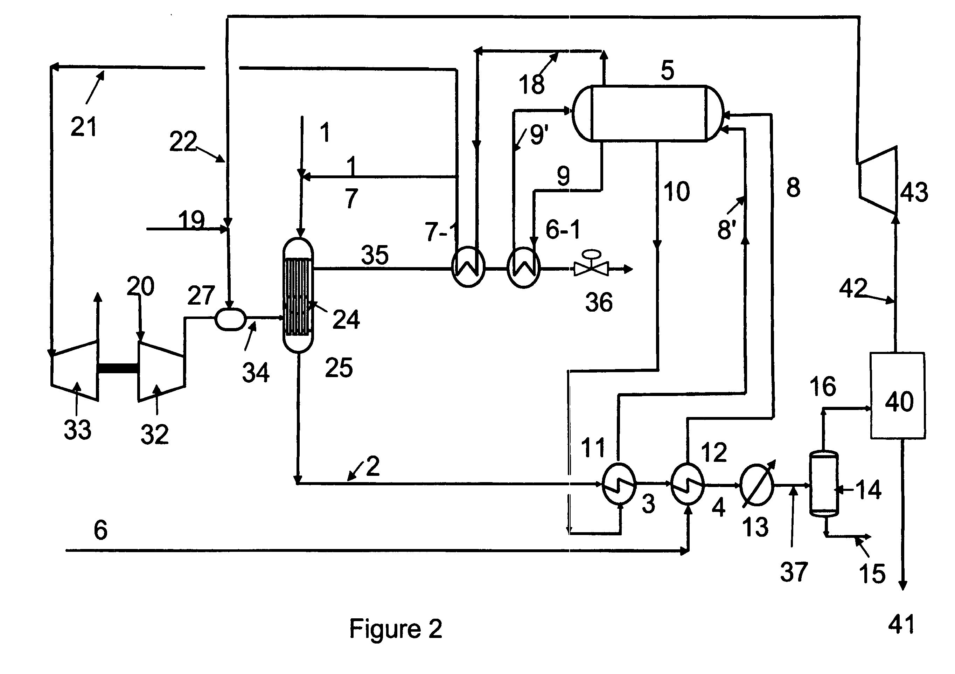

Le nombre d'échangeurs permettant le refroidissement de l'effluent réactionnel (2) tels que (11), (12), 13), le nombre d'échangeur permettant le refroidissement des fumées (35) tels que (6-1) (7-1), et le nombre de lignes telles que (8), (8') (9) conduisant au ballon (5), ne sont pas limitatifs et sont donnés ici en relation avec la figure 2 pour permettre de mieux comprendre la description.

Ladite vapeur d'eau est pour une première partie (17) utilisée en mélange avec la charge à traiter (1), et pour la seconde partie (21) utilisée pour alimenter la turbine (33) qui fournit l'énergie nécessaire au compresseur (32).

Le procédé de production d'hydrogène par vaporeformage d'une coupe pétrolière selon la présente invention produit donc une quantité de vapeur d'eau (18) qui est utilisée totalement dans le procédé lui même en procédant de la manière suivante:
- le débit de vapeur d'eau de procédé (17) est envoyée en mélange avec la charge hydrocarbonée (1) dans le réacteur de vaporeformage (25) en contrôlant son débit pour ajuster le rapport de la vapeur d'eau (17) sur la charge hydrocarbonée (1) à une valeur comprise entre 1,5 et 3 et préférentiellement comprise entre 1,5 et 2,
- le restant de la vapeur d'eau produite (21) est utilisée pour alimenter la turbine à vapeur (33) associée au compresseur (32), le débit d'air (20) alimentant ledit compresseur (32) étant contrôlé au moyen de la vanne (36) placée sur le circuit de fumées (35) en aval des échangeurs (7-1) et (6-1), de manière que la pression d'opération du compresseur (32) s'ajuste entre 3 et 5 bars absolus pour rester sur la courbe caractéristique dudit compresseur.

Dans une variante du procédé selon la présente invention, le gaz effluent (2) (dit "gaz de synthèse"), devenant (37) après refroidissement dans la série d'échangeurs (11), (12), (13) est introduit par le conduit (16) après séparation de l'eau dans le séparateur (14) dans l'unité de séparation sur tamis (40) qui produit d'une part l'hydrogène du procédé (41) à un niveau de pureté supérieur à 99,9 %, et d'autre part un gaz de purge (42) qui est comprimé par le compresseur (43) pour constituer le gaz de combustion (22) alimentant la chambre de combustion (27), éventuellement en mélange avec un gaz combustible d'appoint (19).

Le procédé de production d'hydrogène par vaporeformage selon la présente invention produit une quantité de CO2 rejeté à l'extérieur qui est inférieure à 9,5 kg par m3 d'hydrogène produit, ce qui représente un ratio inférieur à celui de tous les procédés de vaporeformage selon l'art antérieur.

La coupe pétrolière utilisée comme charge du procédé peut être n'importe quelle coupe hydrocarbonée à nombre d'atome de carbone compris entre 1 et 10, et préférentiellement compris entre 1 et 5. La charge à traiter peut être en particulier du gaz naturel.

### DESCRIPTION DETAILLEE DE L'INVENTION

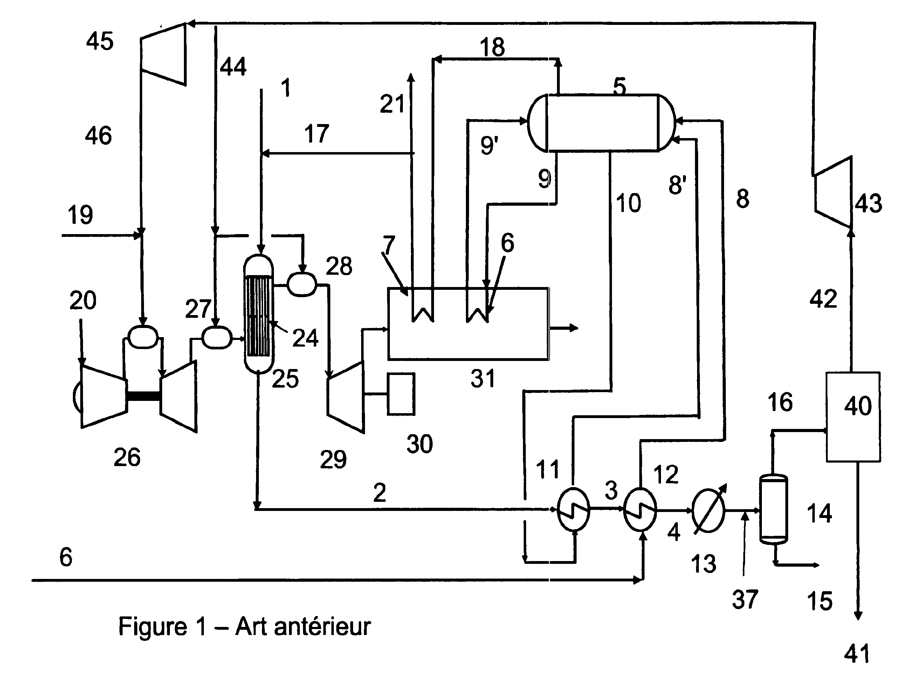

La bonne compréhension du procédé selon l'invention nécessite la description du schéma de la figure 1. Ce schéma représente le procédé Hygensys dont la présente invention peut être vue comme une adaptation aux situations où le site n'a pas de besoin de vapeur (autre que celle nécessitée par le procédé de vaporéformage lui même), ni d'électricité.

La charge, préférentiellement du gaz naturel, est envoyée par le conduit (1) en mélange avec la vapeur d'eau arrivant par le conduit (17) vers le réacteur-échangeur (25). Le catalyseur est disposé dans des tubes baïonnettes (24) du réacteur échangeur (25) chauffés par les fumées en pression provenant d'un générateur de gaz chaud (26), et réchauffées dans une chambre de combustion (27), par la combustion d'un gaz combustible (44). A la sortie du réacteur-échangeur (25), les fumées sont réchauffées dans la chambre de combustion (28), avant d'entrer dans la turbine d'expansion (29), entrainant l'alternateur (30).

Les fumées encore chaudes en sortie de turbine (29) entrent dans une section de récupération de chaleur (31). La chaleur est récupérée en produisant de la vapeur dans la zone (6) et en la surchauffant dans la zone (7) de la section de récupération (31).

L'effluent du réacteur échangeur (25) appelé "gaz de synthèse" (2) sort du réacteur (25) aux alentours de 600°C. Il est envoyé vers l'échangeur (11), pour se refroidir par échange de chaleur indirect avec de l'eau de chaudière arrivant par le conduit (10) et retournant sous forme partiellement vaporisée par le conduit (8) vers le ballon de vapeur (5).

L'effluent réactionnel (3) quittant l'échangeur (11) est ensuite refroidi dans l'échangeur de chaleur (12) par échange de chaleur indirect avec l'eau de chaudière (6) qui est préchauffée et envoyée vers le ballon de vapeur (5).

L'effluent réactionnel (4) constituant le gaz de synthèse est ensuite refroidi dans l'échangeur de chaleur (13) par échange de chaleur indirect avec de l'eau de refroidissement (ou éventuellement de l'air) avant d'alimenter le ballon (14) dans lequel on sépare l'eau résiduaire (15) et le mélange (H2, CO et CO2) récupéré par le conduit (16).

Le flux du conduit (16) est dirigé vers une section de séparation sur tamis (40) qui va séparer l'hydrogène pur (41) de la purge (42) qui va être comprimée par le compresseur (43).

Une partie (44) de ladite purge (42) est brûlée dans les chambres de combustion (27) et (28), le reste étant comprimé dans le compresseur (45) avant d'être envoyé par le conduit (46) vers le générateur de gaz chaud (26), pour être brûlé en mélange avec le gaz combustible (19).

La quantité de vapeur produite est certes réduite par rapport à un procédé de vaporéformage selon l'art antérieur, mais il y a production d'une grande quantité d'électricité au niveau de l'alternateur (30), production qui n'est pas nécessairement souhaitée en même temps que la production d'hydrogène.

La description du schéma de procédé selon la présente invention se fait au moyen de la figure 2. Les éléments du schéma selon l'invention et du schéma selon le procédé Hygensys qui ont la même fonction gardent le même numéro sur les figures 1 et 2.

Cela permet de se rendre compte que le schéma selon l'invention est simplifié par rapport au schéma Hygensys puisque les éléments (29) et (30), et (45) ont disparu et que les échangeurs complexes (7) et (6) sont remplacés par les échangeurs simples (7-1) et (6-1). On entend par échangeur simples des échangeurs à faisceau de tubes et calandre, tels que ceux correspondant à la norme de fabrication TEMA ou CODAP. Ce point est important d'un point de vue économique car la différence de coût entre des échangeurs standards et des échangeurs spéciaux peut être facilement du simple au double, voire du simple au triple.

Plus précisément, le schéma selon l'invention peut se décrire de la façon suivante:
La charge, préférentiellement du gaz naturel, est envoyée par le conduit (1) en mélange avec la vapeur d'eau arrivant par le conduit (17) vers le réacteur-échangeur (25).
Le catalyseur est disposé dans des tubes baïonnettes (24) chauffés par les fumées (34) en pression provenant d'un compresseur (32) associé à une turbine (33), et réchauffées dans une chambre de combustion (27), par la combustion d'un gaz combustible, constitué principalement de la purge (22) et d'un gaz d'appoint (19), avec un flux d'air (20).
A la sortie du réacteur (25), les fumées encore en pression (35) entrent dans deux échangeurs en série (7-1) et (6-1) qui sont des échangeurs simples de type standard.
La chaleur des fumées (35) est récupérée en produisant de la vapeur dans l'échangeur (6-1) et en la surchauffant dans l'échangeur (7-1).
L'effluent réactionnel (2) du réacteur de vaporeformage (25) (appelé "gaz de synthèse") quitte le réacteur (25) aux alentour de 600°C. Il est envoyé dans le premier échangeur (11), pour se refroidir par échange de chaleur indirect avec de l'eau de chaudière arrivant par le conduit (10) et retournant sous forme partiellement vaporisée par le conduit (8') vers le ballon de vapeur (5).
L'effluent réactionnel partiellement refroidi (3) est ensuite refroidi dans l'échangeur de chaleur (12) par échange de chaleur indirect avec l'eau de chaudière (6) qui est préchauffée et envoyée vers le ballon de vapeur (5) devenant le flux (8).
L'effluent réactionnel (4) issu du refroidissement dans l'échangeur (12) est ensuite refroidi dans l'échangeur de chaleur (13) par échange de chaleur indirect avec de l'eau de refroidissement (ou éventuellement de l'air, si le niveau de température le permet) avant d'alimenter le ballon séparateur (14).
Dans ce ballon séparateur (14) on sépare l'eau résiduaire (15) et le mélange H2, CO et CO2 (constituant le "gaz de synthèse") quittant ledit ballon (14) par le conduit (16), vers une section de séparation sur tamis (40) qui va séparer l'hydrogène pur (41) de la purge (42) qui est comprimée par le compresseur (43) pour constituer le gaz de combustion (22) alimentant la chambre de combustion (27), éventuellement en mélange avec un gaz combustible d'appoint (19).
La vapeur d'eau produite par les échangeurs (6-1), (11) et (12) et surchauffée dans l'échangeur (7-1) est envoyée pour une première partie vers le réacteur de vaporéformage (25) par le conduit (17), et pour la seconde partie (21) alimente la turbine à vapeur (33) qui actionne le compresseur (32).
La pression de sortie du compresseur (32) est ajustée de manière à ce qu'il n'y ait pas d'excès de vapeur d'eau.
Les échangeurs (6-1) et (7-1) sont de simples échangeurs sous pression (type tube/calandre de type standard).

### EXEMPLE COMPARATIF

On considère une production de 100 000 Nm3/h d'hydrogène à un niveau de pureté de 99,9 % poids.

Selon l'art antérieur du procédé Hygensys, on a besoin de 32,1 tonne/h de gaz naturel et on coproduit 18 tonne/h de vapeur et 28 MW électrique (MW est l'abréviation de méga watt, soit 10⁶ watts).

Selon le procédé de la présente invention, on a besoin seulement de 29,7 tonne/h de gaz naturel, et on n'a aucune production excédentaire de vapeur d'eau, (ni aucune production d'énergie électrique).

De surcroit, le coût de l'unité est réduit par rapport au cas de l'art antérieur, car on n'a pas besoin de la turbine d'expansion (29).

La consommation de gaz naturel étant plus faible, le CO2 émis est également réduit à 84 tonnes/h (soit 9,1 kg CO2/ kg d'hydrogène) au lieu de 87,9 dans le procédé Hygensys (soit 9,5 kg CO2/ kg d'hydrogène).

On fournit ci dessous un bilan matière du procédé selon l'invention pour les flux principaux;
Charge (1) : 29,4 tonnes/h
Vapeur d'eau du procédé (17): 64,6 tonne/h
Vapeur d'eau (21) nécessaire à l'entrainement de la turbine (33): 56,9 tonne/h
Fumées chaudes (34): 411,3 tonne/h
H2 produit (41): 9,2 tonne/h
Gaz de combustion (22): 64,7 tonne/h
Condensats (15): 20,2 tonne/h
Gaz combustible d'appoint (19): 0,36 tonne/h.

## Revendications

1. Procédé de production d'hydrogène par vaporeformage d'une coupe pétrolière faisant appel à une chambre de combustion (27) produisant des fumées chaudes (34) à partir d'un flux d'air (20) et de gaz combustible (19), lesdites fumées chaudes (34) étant mises en pression par un compresseur (32), et apportant leurs calories au niveau d'un réacteur échangeur (25) à l'intérieur duquel s'effectuent les réactions de vaporeformage de la charge hydrocarbure (1) en mélange avec la vapeur (17), l'effluent réactionnel (2), dit gaz de synthèse, étant refroidi dans une série d'échangeurs, et les fumées (35) étant refroidies dans une autre série d'échangeurs (6-1) (7-1) qui permettent de générer de la vapeur d'eau (8), (8'), (9') introduite dans un ballon (5), procédé dans lequel la vapeur d'eau (18) produite par le procédé est utilisée totalement dans le procédé lui même en procédant de la manière suivante:
- la vapeur d'eau de procédé (17) est envoyée en mélange avec la charge hydrocarbonée (1) dans le réacteur de vaporeformage (25) en contrôlant son débit pour ajuster le rapport massique du débit de vapeur d'eau (17) sur le débit de charge hydrocarbonée (1) à une valeur comprise entre 1,5 et 3 et préférentiellement comprise entre 1,5 et 2,
- le restant de la vapeur d'eau produite (21) est utilisé pour alimenter la turbine à vapeur (33) associée au compresseur (32), le débit d'air (20) alimentant ledit compresseur (32) étant contrôlé au moyen de la vanne (36) placée sur le circuit de fumées (35) en aval des échangeurs (7-1) et (6-1), de manière à ce que la pression d'opération du compresseur (32) s'ajuste entre 3 et 5 bars absolus pour rester sur la courbe caractéristique dudit compresseur.

2. Procédé suivant la revendications 1, **caractérisé en ce que** le gaz effluent (2) dit gaz de synthèse, devenant effluent (37) après refroidissement dans la série d'échangeurs (11), (12), (13), est introduit dans l'unité de séparation sur tamis (40) qui produit d'une part l'hydrogène du procédé (41) à un niveau de pureté supérieur à 99,9 % poids, et d'autre part un gaz de purge (42) qui est comprimé par le compresseur (43) pour constituer le gaz de combustion (22) alimentant la chambre de combustion (27), éventuellement en mélange avec un gaz combustible d'appoint (19).

3. Procédé de production d'hydrogène par vaporeformage selon la revendication 1 ou 2, dans lequel la charge du réacteur de vaporeformage est une coupe pétrolière à nombre d'atomes de carbone compris entre 1 et 10, et préférentiellement compris entre 1 et 5.

## Claims

1. A process for the production of hydrogen by steam reforming an oil cut employing a combustion chamber (27) producing hot flue gases (34) starting from a stream of air (20) and fuel gas (19), said hot flue gases (34) being pressurized by a compressor (32) and supplying their heat to an exchanger-reactor (25) within which the reactions for steam reforming a hydrocarbon feed (1) mixed with steam (17) are carried out, the reaction effluent (2), termed synthesis gas, being cooled in a series of exchangers and the flue gases (35) being cooled in another series of exchangers (6-1) (7-1) in order to generate steam introduced into a drum (5) via the streams (8), (8') and (9'), in which process the steam (18) produced by the process is used in its entirety in the process per se by proceeding as follows:
• the flow of steam from the process (17) is sent as a mixture with the hydrocarbon feed (1) to the steam reforming reactor (25), controlling its flow to adjust the ratio of the steam (17) to the hydrocarbon feed (1) to a value in the range 1.5 to 3, preferably in the range 1,5 to 2;
• the remaining steam which is produced (21) is used to supply the steam turbine (33) associated with a compressor (32), the flow of air (20) supplying said compressor (32) being controlled by means of a valve (36) placed on the flue gases circuit (35) downstream of the exchangers (7-1) and (6-1) in order that the operating pressure of the compressor (32) is adjusted to between 3 and 5 bars absolute in order to remain on the characteristic curve of said compressor.

2. A process according to claim 1, **characterized in that** the effluent gas (2) (known as "synthesis gas") obtained (37) after cooling in the series of exchangers (11), (12), (13) is introduced into a sieve separation unit (40) which on the one hand produces process hydrogen (41) in a purity of more than 99.9% by weight and on the other hand produces a purge gas (42) which is compressed by the compressor (43) to constitute the combustion gas (22) supplying the combustion chamber (27), optionally as a mixture with a makeup fuel gas (19).

3. A process for the production of hydrogen by steam reforming according to claim 1 or claim 2, in which the feed for the steam reforming reactor is an oil cut containing in the range 1 to 10 carbon atoms, preferably in the range 1 to 5,

## Patentansprüche

1. Verfahren zur Herstellung von Wasserstoff durch Dampfreformierung einer Erdölfraktion mit Hilfe einer Brennkammer (27), welche heiße Gase (34) aus einem Luftstrom (20) und einem brennbaren Gas (19) erzeugt, wobei die heißen Gase (34) mittels eines Kompressors (32) unter Druck gesetzt werden, und welche die Wärme einem Austauschreaktor (25) zuführt, in dessen Inneren die Reaktionen der Dampfreformierung der Kohlenhydratcharge (1) im Gemisch mit dem Dampf (17) erfolgen, wobei der Reaktionsabfluss (2), das heißt das Synthesegas, in einer Reihe von Austauschern abgekühlt wird und die Gase (35) in einer weiteren Reihe von Austauschern (6-1) (7-1) abgekühlt werden, welche das Erzeugen von Wasserdampf (8), (8'), (9') gestatten, der in einen Ballon (5) eingeführt wird, wobei in dem Verfahren der durch das Verfahren hergestellte Wasserdampf (18) vollkommen im Verfahren selbst verwendet wird, wobei in folgender Weise vorgegangen wird:
- der Wasserdampf des Verfahrens (17) wird im Gemisch mit der Kohlenhydratcharge (1) in den Dampfreformierungsreaktor (25) geleitet, wobei sein Durchsatz kontrolliert wird, um das Massenverhältnis des Durchsatzes von Wasserdampf (17) dem Durchsatz der Kohlenhydratcharge (1) bei einem Wert zwischen 1,5 und 3 und vorzugsweise zwischen 1,5 und 2 anzupassen,
- der Rest des erzeugten Wasserdampfs (21) wird verwendet, um die mit dem Kompressor (32) verbundene Wasserdampfturbine (33) zu beschicken, wobei der Luftdurchsatz (20), der den Kompressor (32) beschickt mittels des Ventils (36) kontrolliert wird, das im Gaskreislauf stromabwärts der Austauscher (7-1) und (6-1) so angeordnet wird, dass sich der Arbeitsdruck des Kompressors (32) zwischen 3 und 5 bar absolut einstellt, um auf der den Kompressor kennzeichnenden Kurve zu verbleiben.

2. Verfahren nach Anspruch 1, **dadurch gekennzeichnet, dass** das abfließende Gas (2), das heißt das Synthesegas, das nach Abkühlung in der Reihe von Austauschern (11), (12), (13) zum Abfluss (37) wird, in eine Sieb-Trenneinheit (40) eingeleitet wird, die einerseits den Wasserstoff des Verfahrens (41) mit einem Reinheitsgrad über 99,9 Gew.% erzeugt und andererseits ein Spülgas (42), das durch den Kompressor (43) komprimiert wird, um das Brenngas (22) zu bilden, welches die Brennkammer (27), gegebenenfalls im Gemisch mit einem passenden brennbaren Gas (19) beschickt.

3. Verfahren zur Herstellung von Wasserstoff durch Dampfreformierung nach Anspruch 1 oder 2, wobei die Charge des Dampfreformierungsreaktors eine Erdölfraktion mit einer Anzahl von Kohlenstoffatomen zwischen 1 und 10 und vorzugsweise zwischen 1 und 5 ist.
